(19) **Europäisches Patentamt European Patent Office Office européen des brevets**

(11) **EP 3 055 129 B1**

(12) **EUROPEAN PATENT SPECIFICATION**

(45) Date of publication and mention of the grant of the patent:
**27.11.2024 Bulletin 2024/48**

(21) Application number: **14792660.4**

(22) Date of filing: **06.10.2014**

(51) International Patent Classification (IPC):
**B32B 17/10** $^{(2006.01)}$       **B32B 1/00** $^{(2024.01)}$

(52) Cooperative Patent Classification (CPC):
**B32B 17/10293; B32B 1/00; B32B 17/10036; B32B 17/10119; B32B 17/10137; B32B 17/1055; B32B 17/10761**

(86) International application number:
**PCT/US2014/059262**

(87) International publication number:
**WO 2015/054112 (16.04.2015 Gazette 2015/15)**

(54) **GLASS LAMINATE STRUCTURES HAVING IMPROVED EDGE STRENGTH**

VERBUNDGLASSTRUKTUREN MIT VERBESSERTER KANTENSTÄRKE

STRUCTURES STRATIFIÉES EN VERRE AYANT UNE RÉSISTANCE DES BORDS AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.10.2013 US 201361887646 P**

(43) Date of publication of application:
**17.08.2016 Bulletin 2016/33**

(73) Proprietor: **Corning Incorporated Corning, New York 14831 (US)**

(72) Inventors:
• **BROWN, Gordon Charles**
  **Watkins Glen, New York 14878 (US)**
• **CLEARY, Thomas Michael**
  **Elmira, New York 14903 (US)**
• **FISHER, William Keith**
  **Suffield, Connecticut 06078 (US)**
• **FRISKE, Mark Stephen**
  **Campbell, New York 14821 (US)**
• **RICKERL, Paul George**
  **Endicott, New York 13760-7709 (US)**
• **SHENG, Huan-Hung**
  **Horseheads, New York 14845 (US)**
• **SHUSTACK, Paul John**
  **Elmira, New York 14905 (US)**

(74) Representative: **Epping - Hermann - Fischer Patentanwaltsgesellschaft mbH Postfach 20 07 34 80007 München (DE)**

(56) References cited:
**US-A- 5 270 518      US-A- 5 523 138
US-A1- 2009 181 203      US-A1- 2012 328 843**

**Description**

**BACKGROUND**

This application claims the benefit of priority to U.S. Application No. 61/887646 filed on October 7, 2013.

Glass laminates can be used as windows and glazing in architectural and vehicle or transportation applications, including automobiles, rolling stock, locomotive and airplanes. Glass laminates can also be used as glass panels in balustrades and stairs, and as decorative panels or coverings for walls, columns, elevator cabs, kitchen appliances and other applications. As used herein, a glazing or a laminated glass structure can be a transparent, semi-transparent, translucent or opaque part of a window, panel, wall, enclosure, sign or other structure. Common types of glazing that are used in architectural and/or vehicular applications include clear and tinted laminated glass structures.

Conventional automotive glazing constructions include two plies of 2 mm soda lime glass with a polyvinyl butyral (PVB) interlayer. These laminate constructions have certain advantages, including low cost and a sufficient impact resistance for automotive and other applications. However, because of their limited impact resistance and higher weight, these laminates exhibit poor performance characteristics, including a higher probability of breakage when struck by roadside debris, vandals and other objects of impact as well as lower fuel efficiencies for a respective vehicle.

In applications where strength is important (such as the above automotive application), the strength of conventional glass can be enhanced by several methods, including coatings, thermal tempering, and chemical strengthening (ion exchange). Thermal tempering is conventionally employed in such applications with thick, monolithic glass sheets, and has the advantage of creating a thick compressive layer through the glass surface, typically 20 to 25% of the overall glass thickness. The magnitude of the compressive stress is relatively low, however, typically less than 100 MPa. Furthermore, thermal tempering becomes increasingly ineffective for relatively thin glass, e.g., less than about 2 mm.

A failure mode for automotive glazing laminates can be fracture from the edges due to flexure during manufacture, shipping, installation and also during use. Since the load required to initiate fracture is generally a function of thickness squared, conventional glazing laminates are generally limited to using relatively thick pieces of glass in the laminate structures, e.g., approximately 1.6 mm to 2.0 mm for each glass sheet.

There is a need in the industry, however, to provide a thinner and lighter glass laminate structure having superior characteristics, e.g., light-weight, high strength, etc., and having an improved edge strength performance than conventional glass laminate structures.

US 5,270,518 A relates to a laminated glazing pane which may be used as an aircraft windshield. The pane comprises at least two glass sheets connected together by an intermediate layer of polyvinyl butyral and, in its marginal zone, between at least one glass sheet and the intermediate layer, at least one adhesive ring comprising a plastic material which absorbs at least a portion of the stresses to which the pane is subjected during operation.

US 2009/181203 A discloses a laminated window comprising two substrates between which an active system is placed, characterized in that the window is provided with a first peripheral sealing means for sealing the active system, in particular against water in vapor form, comprising at least one seal based on one or more hot-melt polymers chosen from at least one of the following polymer families: ethylene/vinyl acetate, polyisobutylene, butyl rubber and polyamide, and a second sealing means, especially for sealing against liquid water, this second sealing means being positioned between the substrates and peripherally with respect to the first sealing means.

US 5,523,138 A discloses a glazing assembly, suitable for use as an emergency escape, includes a laminated panel composed of at least two sheets of vitreous material adhered to a polymeric intervening layer which extends continuously between the at least two sheets of vitreous material, wherein, in at least one minor area zone of the laminated panel, possibility of elongation of the polymeric intervening layer under the influence of mechanical stress when the at least two sheets of vitreous material are broken, is different compared with the possibility of elongation of the polymeric intervening layer over the rest of the laminated panel.

**SUMMARY**

The present invention relates to a laminate structure according to claim 1. Preferred embodiments are set forth in the dependent claims. As defined herein, when the glass laminates are put into use, an external glass sheet will be proximate to or in contact with the environment, while an internal glass sheet will be proximate to or in contact with the interior (e.g., cabin) of the structure or vehicle (e.g., automobile) incorporating the glass laminate structure.

**BRIEF DESCRIPTION OF THE DRAWINGS**

For the purposes of illustration, there are forms shown in the drawings that are presently preferred, it being understood, however, that the embodiments disclosed and discussed herein are not limited to the precise arrangements and instrumentalities shown.

Figure 1 is a cross-sectional illustration of a glass laminate structure according to some embodiments of the present disclosure.

Figure 2 is a plan view of the embodiment depicted in Figure 1.

Figure 3 is a schematic of an exemplary bent glass laminate structure according to further embodiments of the present disclosure.

Figure 4 is a perspective view of additional embodiments of the present disclosure.

Figures 5A and 5B provide a before and after illustrations of an experiment having an embodiment of the present disclosure.

Figure 6 is a box plot of failure for three point bend experimentation of several embodiments of the present disclosure.

Figure 7 is a schematic illustration of a four point bend test of a laminate structure.

Figure 8 is a Weibull plot of three-point bend testing of these embodiments at various loadings.

Figure 9 is a box plot of failure load for four point bend experimentation of several embodiments of the present disclosure.

Figure 10 is a box plot of failure load for four point bend experimentation of several embodiments of the present disclosure.

Figure 11 is a four-point bend failure load plot for the embodiments depicted in Figure 10.

## DETAILED DESCRIPTION

In the following description, like reference characters designate like or corresponding parts throughout the several views shown in the figures. It is also understood that, unless otherwise specified, terms such as "top," "bottom," "outward," "inward," and the like are words of convenience and are not to be construed as limiting terms. In addition, whenever a group is described as comprising at least one of a group of elements and combinations thereof, it is understood that the group may comprise, consist essentially of, or consist of any number of those elements recited, either individually or in combination with each other.

Similarly, whenever a group is described as consisting of at least one of a group of elements or combinations thereof, it is understood that the group may consist of any number of those elements recited, either individually or in combination with each other. Unless otherwise specified, a range of values, when recited, includes both the upper and lower limits of the range. As used herein, the indefinite articles "a," and "an," and the corresponding definite article "the" mean "at least one" or "one or more," unless otherwise specified.

The following description of the present disclosure is provided as an enabling teaching thereof and its best, currently-known embodiment.

Embodiments of the present disclosure are generally directed to glass laminate structures including one or more chemically-strengthened glass panes. Some embodiments of the present disclosure include a chemically-strengthened outer glass pane and a non-chemically-strengthened inner glass pane. Other embodiments of the present disclosure include a chemically-strengthened inner glass pane and a non-chemically-strengthened outer glass pane. Further embodiments of the present disclosure can include chemically-strengthened outer and inner glass panes. Of course, some embodiments can include non-chemically strengthened outer and inner glass panes. As defined herein, when the glass laminates are put into use, an external glass sheet will be proximate to or in contact with the environment, while an internal glass sheet will be proximate to or in contact with the interior (e.g., cabin) of the structure or vehicle (e.g., automobile) incorporating the glass laminate structure. Exemplary embodiments as described herein provide a glass laminate structure having high flexure strength as a function of local increases in effective laminate modulus around the periphery of the glass laminate structure.

Conventionally available films for glass lamination are typically thermoplastic materials which soften and flow at higher temperatures to fill gaps between glass panes in a glass laminate structure and to establish bonding during a respective lamination process. To minimize cost and facilitate lamination processes, these films are typically designed to be laminated around 100° C to 150° C for proper flow to assist bonding of the glass panes. Softening and sheering of the thermoplastic material, however, can occur at much lower temperatures under stress thereby resulting in shape deformation of the respective glass laminate structure. As noted above, conventional glass laminate structures employ soda lime glass at thicknesses of greater than about 1.6 mm to provide mechanical strength to the glass laminate structure, e.g., to prevent bending of the laminate structure from weight or moderate stress even when the bonding film may sheer at higher temperatures. Such conventional thick glass can provide rigidity for conventional laminate structures; however, when thin and flexible glass sheets or panes are utilized, the laminate structure typically lacks the necessary rigidity and can deform under certain temperatures. When thin glass laminate structures deform, the glass and bonding film generally moves or slides to assume the final shape. Embodiments of the present disclosure, however, limit the movement of the thin glass laminate structure by increasing the rigidity thereof similar to employing a fixture to fasten the borders of the structure. To this end, exemplary embodiments utilize a rigid bonding material around the borders of a glass laminate structure. Such a material can adhere the thin glass sheets in the respective glass laminate structure together with high adhesion and can remain stable and rigid at higher temperatures. Non-limiting materials include, but are not limited to, thermosetting plastics that soften less at higher temperatures. Thermosetting materials are usually liquid or malleable prior to curing and can be employed as adhesives and/or designed to be molded into their final form. Thermosetting materials can also change irreversibly into an infusible, insoluble polymer network by curing whereby the thermosetting material becomes a rigid, solid material that remains rigid at higher temperatures. Exemplary embodiments can also utilize high modulus thermosetting materials in portions of the interlayer in a glass laminate structure which effectively prevents glass sheets in a laminate structure from moving away from each other to thus increase the rigidity of the structure.

Suitable glass sheets used in embodiments of the present disclosure can be strengthened or chemically-strengthened by a pre- or post-ion exchange process. In this process, typically by immersion of the glass sheet into a molten salt bath for a predetermined period of time, ions at or near the surface of the glass sheet are exchanged for larger metal ions from the salt bath. In one embodiment, the temperature of the molten salt bath is about 430°C and the predetermined time period is about eight hours. The incorporation of the larger ions into the glass strengthens the sheet by creating a compressive stress in a near surface region. A corresponding tensile stress can be induced within a central region of the glass to balance the compressive stress.

Exemplary ion-exchangeable glasses that are suitable for forming glass sheets or glass laminates can be alkali aluminosilicate glasses or alkali aluminoborosilicate glasses, though other glass compositions are contemplated. As used herein, "ion exchangeable" means that a glass is capable of exchanging cations located at or near the surface of the glass with cations of the same valence that are either larger or smaller in size. One exemplary glass composition comprises $SiO_2$, $B_2O_3$ and $Na_2O$, where $(SiO_2 + B_2O_3) \geq 66$ mol.%, and $Na_2O \geq 9$ mol.%. In an embodiment, the glass sheets include at least 6 wt.% aluminum oxide. In a further embodiment, a glass sheet includes one or more alkaline earth oxides, such that a content of alkaline earth oxides is at least 5 wt.%. Suitable glass compositions, in some embodiments, further comprise at least one of $K_2O$, MgO, and CaO. In a particular embodiment, the glass can comprise 61-75 mol.% $SiO_2$; 7-15 mol.% $Al_2O_3$; 0-12 mol.% $B_2O_3$; 9-21 mol.% $Na_2O$; 0-4 mol.% $K_2O$; 0-7 mol.% MgO; and 0-3 mol.% CaO.

A further exemplary glass composition suitable for forming hybrid glass laminates comprises: 60-70 mol.% $SiO_2$; 6-14 mol.% $Al_2O_3$; 0-15 mol.% $B_2O_3$; 0-15 mol.% $Li_2O$; 0-20 mol.% $Na_2O$; 0-10 mol.% $K_2O$; 0-8 mol.% MgO; 0-10 mol.% CaO; 0-5 mol.% $ZrO_2$; 0-1 mol.% $SnO_2$; 0-1 mol.% $CeO_2$; less than 50 ppm $As_2O_3$; and less than 50 ppm $Sb_2O_3$; where 12 mol.% $\leq (Li_2O + Na_2O + K_2O) \leq 20$ mol.% and 0 mol.% $\leq (MgO + CaO) \leq 10$ mol.%. A still further exemplary glass composition comprises: 63.5-66.5 mol.% $SiO_2$; 8-12 mol.% $Al_2O_3$; 0-3 mol.% $B_2O_3$; 0-5 mol.% $Li_2O$; 8-18 mol.% $Na_2O$; 0-5 mol.% $K_2O$; 1-7 mol.% MgO; 0-2.5 mol.% CaO; 0-3 mol.% $ZrO_2$; 0.05-0.25 mol.% $SnO_2$; 0.05-0.5 mol.% $CeO_2$; less than 50 ppm $As_2O_3$; and less than 50 ppm $Sb_2O_3$; where 14 mol.% $\leq (Li_2O + Na_2O + K_2O) \leq 18$ mol.% and 2 mol.% $\leq (MgO + CaO) \leq 7$ mol.%.

In a particular embodiment, an alkali aluminosilicate glass comprises alumina, at least one alkali metal and, in some embodiments, greater than 50 mol.% $SiO_2$, in other embodiments at least 58 mol.% $SiO_2$, and in still other embodiments at least 60 mol.% $SiO_2$, wherein the ratio $\dfrac{Al_2O_3 + B_2O_3}{\sum \text{modifiers}} > 1$ , where in the ratio the components are expressed in mol.% and the modifiers are alkali metal oxides. This glass, in particular embodiments, comprises, consists essentially of, or consists of: 58-72 mol.% $SiO_2$; 9-17 mol.% $Al_2O_3$; 2-12 mol.% $B_2O_3$; 8-16 mol.% $Na_2O$; and 0-4 mol.%

$K_2O$, wherein the ratio $\dfrac{Al_2O_3 + B_2O_3}{\sum \text{modifiers}} > 1$ .

In another embodiment, an alkali aluminosilicate glass comprises, consists essentially of, or consists of: 61-75 mol.% $SiO_2$; 7-15 mol.% $Al_2O_3$; 0-12 mol.% $B_2O_3$; 9-21 mol.% $Na_2O$; 0-4 mol.% $K_2O$; 0-7 mol.% MgO; and 0-3 mol.% CaO. In yet another embodiment, an alkali aluminosilicate glass substrate comprises, consists essentially of, or consists of: 60-70 mol.% $SiO_2$; 6-14 mol.% $Al_2O_3$; 0-15 mol.% $B_2O_3$; 0-15 mol.% $Li_2O$; 0-20 mol.% $Na_2O$; 0-10 mol.% $K_2O$; 0-8 mol.% MgO; 0-10 mol.% CaO; 0-5 mol.% $ZrO_2$; 0-1 mol.% $SnO_2$; 0-1 mol.% $CeO_2$; less than 50 ppm $As_2O_3$; and less than 50 ppm $Sb_2O_3$; wherein 12 mol.% $\leq Li_2O + Na_2O + K_2O \leq$ 20 mol.% and 0 mol.% $\leq$ MgO + CaO $\leq$ 10 mol.%. In still another embodiment, an alkali aluminosilicate glass comprises, consists essentially of, or consists of: 64-68 mol.% $SiO_2$; 12-16 mol.% $Na_2O$; 8-12 mol.% $Al_2O_3$; 0-3 mol.% $B_2O_3$; 2-5 mol.% $K_2O$; 4-6 mol.% MgO; and 0-5 mol.% CaO, wherein: 66 mol.% $\leq SiO_2 + B_2O_3 + CaO \leq$ 69 mol.%; $Na_2O + K_2O + B_2O_3 + MgO + CaO + SrO >$ 10 mol.%; 5 mol.% $\leq$ MgO + CaO + SrO $\leq$ 8 mol.%; $(Na_2O + B_2O_3) - Al_2O_3 \leq$ 2 mol.%; 2 mol.% $\leq Na_2O - Al_2O_3 \leq$ 6 mol.%; and 4 mol.% $\leq$ $(Na_2O + K_2O) - Al_2O_3 \leq$ 10 mol.%.

Exemplary chemically-strengthened as well as non-chemically-strengthened glass, in some embodiments, can be batched with 0-2 mol.% of at least one fining agent selected from a group that includes $Na_2SO_4$, NaCl, NaF, NaBr, $K_2SO_4$, KCl, KF, KBr, and $SnO_2$. In one exemplary embodiment, sodium ions in exemplary chemically-strengthened glass can be replaced by potassium ions from the molten bath, though other alkali metal ions having a larger atomic radii, such as rubidium or cesium, can replace smaller alkali metal ions in the glass. According to particular embodiments, smaller alkali metal ions in the glass can be replaced by $Ag^+$ ions. Similarly, other alkali metal salts such as, but not limited to, sulfates, halides, and the like may be used in the ion exchange process. The replacement of smaller ions by larger ions at a temperature below that at which the glass network can relax produces a distribution of ions across the surface of the glass that results in a stress profile. The larger volume of the incoming ion produces a compressive stress (CS) on the surface and tension (central tension, or CT) in the center of the glass. The compressive stress is related to the central tension by the following relationship:

$$CS = CT\left(\frac{t - 2DOL}{DOL}\right)$$

where t represents the total thickness of the glass sheet and DOL is the depth of exchange, also referred to as depth of layer.

According to various embodiments, glass sheets and/or glass laminate structures comprising ion-exchanged glass can possess an array of desired properties, including low weight, high impact resistance, and improved sound attenuation. In one embodiment, a chemically-strengthened glass sheet can have a surface compressive stress of at least 250 MPa, e.g., at least 250, 300, 400, 450, 500, 550, 600, 650, 700, 750 or 800 MPa, a depth of layer at least about 20 $\mu$m (e.g., at least about 20, 25, 30, 35, 40, 45, or 50 $\mu$m) and/or a central tension greater than 40 MPa (e.g., greater than 40, 45, or 50 MPa) but less than 100 MPa (e.g., less than 100, 95, 90, 85, 80, 75, 70, 65, 60, or 55 MPa). A modulus of elasticity of a chemically-strengthened glass sheet can range from about 60 GPa to 85 GPa (e.g., 60, 65, 70, 75, 80 or 85 GPa). The modulus of elasticity of the glass sheet(s) and the polymer interlayer can affect both the mechanical properties (e.g., deflection and strength) and the acoustic performance (e.g., transmission loss) of the resulting glass laminate.

Exemplary glass sheet forming methods include fusion draw and slot draw processes, which are each examples of a down-draw process, as well as float processes. These methods can be used to form both chemically-strengthened and non-chemically-strengthened glass sheets. The fusion draw process generally uses a drawing tank that has a channel for accepting molten glass raw material. The channel has weirs that are open at the top along the length of the channel on both sides of the channel. When the channel fills with molten material, the molten glass overflows the weirs. Due to gravity, the molten glass flows down the outside surfaces of the drawing tank. These outside surfaces extend down and inwardly so that they join at an edge below the drawing tank. The two flowing glass surfaces join at this edge to fuse and form a single flowing sheet. The fusion draw method offers the advantage that, because the two glass films flowing over the channel fuse together, neither outside surface of the resulting glass sheet comes in contact with any part of the apparatus. Thus, the surface properties of the fusion drawn glass sheet are not affected by such contact. The slot draw method is distinct from the fusion draw method. Here the molten raw material glass is provided to a drawing tank. The bottom of the drawing tank has an open slot with a nozzle that extends the length of the slot. The molten glass flows through the slot/nozzle and is drawn downward as a continuous sheet and into an annealing region. The slot draw process can provide a thinner sheet than the fusion draw process because a single sheet is drawn through the slot, rather than two sheets being fused together.

Down-draw processes produce glass sheets having a uniform thickness that possess surfaces that are relatively pristine. Because the strength of the glass surface is controlled by the amount and size of surface flaws, a pristine surface that has had minimal contact has a higher initial strength. When this high strength glass is then chemically strengthened, the resultant strength can be higher than that of a surface that has been a lapped and polished. Down-drawn glass may be drawn to a thickness of less than about 2 mm. In addition, down drawn glass has a very flat, smooth surface that can be used in its final application without costly grinding and polishing.

In the float glass method, a sheet of glass that may be characterized by smooth surfaces and uniform thickness is made by floating molten glass on a bed of molten metal, typically tin. In an exemplary process, molten glass that is fed onto the surface of the molten tin bed forms a floating ribbon. As the glass ribbon flows along the tin bath, the temperature is gradually decreased until a solid glass sheet can be lifted from the tin onto rollers. Once off the bath, the glass sheet can be cooled further and annealed to reduce internal stress.

As noted above, exemplary glass sheets can be used to form glass laminates or glass laminate structures. The term "thin" as used herein means a thickness of up to about 1.5 mm, up to about 1.0 mm, up to about 0.7 mm, or in a range of from about 0.5 mm to about 1.0 mm, or from about 0.5 mm to about 0.7 mm. The terms "sheet", "structure", "glass structures", "laminate structures" and "glass laminate structures" may be used interchangeably in the present disclosure and such use should not limit the scope of the claims appended herewith. In some embodiments, a glass laminate can also comprise an externally and/or internally-facing chemically-strengthened glass sheet, an internally and/or externally facing non-chemically-strengthened glass sheet, and a polymer interlayer formed between the glass sheets. The polymer interlayer can comprise a monolithic polymer sheet, a multilayer polymer sheet, or a composite polymer sheet (i.e., a polymer sheet(s) having regions of varying modulus of elasticity).

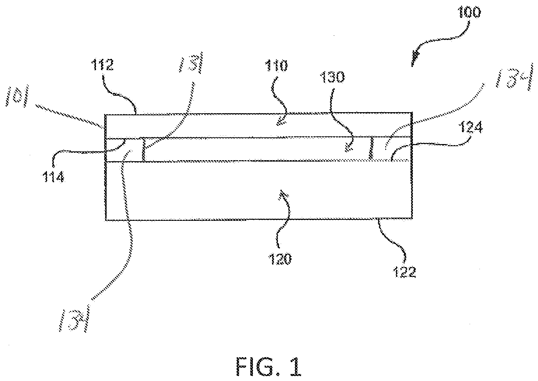

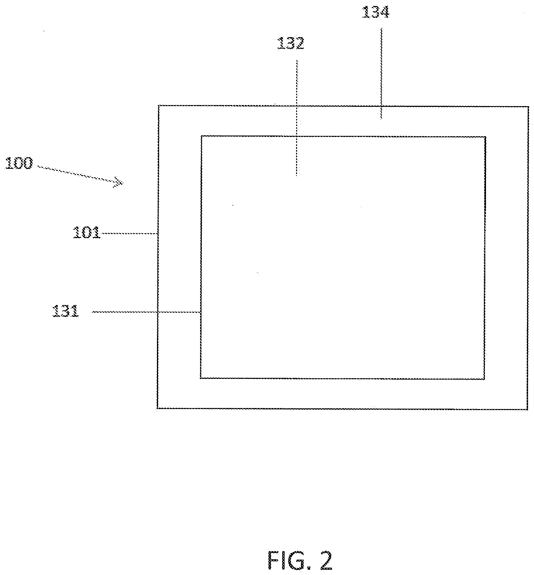

Figure 1 is a cross-sectional illustration of a glass laminate structure according to some embodiments of the present disclosure. Figure 2 is a plan view of the embodiment depicted in Figure 1. With reference to Figures 1 and 2, an exemplary glass laminate structure 100 comprises an external glass sheet 110, an internal glass sheet 120, and a polymer interlayer 130. The polymer interlayer 130 can comprise a first region having a first modulus of elasticity and a second region having a second modulus of elasticity. In some embodiments, the first region can be a central region 132 of the polymer interlayer 130 and the second region can be located along the perimeter of the central region 132, i.e., a peripheral region 134 of the polymer interlayer 130. While the first and second regions have been depicted as rectangular or square in form with a corresponding annulus, the claims appended herewith should not be so limited as the central region 132 can be any geometric shape (e.g., oval, circular, oblong, trapezoidal, symmetrical, asymmetrical, etc.) and can conform to a defined space or opening for the respective glass laminate structure. In similar fashion, the peripheral region 134 can annularly encompass the central region 132 and form an annular oval form, annular circular form, etc. Furthermore, the lateral dimensions of the peripheral region 134, i.e., the X, Y or lateral distance from an edge 101 of the glass laminate structure 100 to an edge 131 of the central region 132 can vary along the length of the respective peripheral region 134 or can be substantially constant. Moduli of elasticity of central and peripheral regions within an exemplary polymer interlayer can range from about 1 MPa to 90 MPa (e.g., about 1, 2, 5, 10, 15, 20, 25, 30, 40, 50, 60, 75, 80, 90 MPa). In some embodiments, the modulus of elasticity of the first or central region 132 can be about 15 MPa, between about 1 MPa to about 20 MPa, or between 2 to about 15 MPa. In these embodiments, the modulus of elasticity of the second or peripheral region 134 can be greater than the modulus of elasticity of the first or central region 132, can be greater than about 25 MPa, can be between 25 MPa and 90 MPa, can be greater than about 30 MPa, can be greater than about 50 MPa, can be about 75 MPa.

In some embodiments, the peripheral region 134 can be formed from a thermosetting polymer or thermoset. Exemplary thermosetting polymeric materials include, but are not limited to, polyurethanes, vulcanized rubber, Bakelite, polyester materials, ionomers (SentryGlass) phenol-formaldehyde materials, urea-formaldehyde materials, epoxy resins, polyimides, melamine resins, esters, polycyanurates, Duroplast and other suitable esters, resins, epoxies, cross-linked polymers and/or reinforced polymeric materials. Further, exemplary materials for the peripheral region 132 can also be, but not limited to, coatings applied by polymer coating systems as a liquid pre-polymeric material which can then be chemically reacted to form a polymeric coating. These polymer coating compositions can contain minimal, if any, (e.g., < 10%) solvent or water. In some embodiments, the pre-polymeric material can cure to a thermoset polymer especially in cases where minimal creep or resistance to flow of the cured coating material is necessary. Non-limiting examples of usable polymer coating chemistry families in this category are, but not limited to, 2-part epoxies, 2-part urethanes, 2-part acrylics, 2-part silicones, moisture cure urethanes or epoxies, phenolics, novolacs, urea formaldehyde, melamine formaldehyde, crosslinking acrylics or vinyls, alkyds, unsaturated polyesters, polyimides, polyamides, and photo or electron beam curable polymers. Exemplary photo or electron beam curable prepolymers can be from any of the three major families of this type of chemistry, e.g., free radical addition type (e.g., acrylates), free radical step growth type (e.g., thiolene), cationic addition type (e.g., epoxy homopolymerization), and combinations thereof.

In some embodiments, a thermoplastic material such as PVB may be applied as a preformed polymer interlayer for the central and/or peripheral regions. This composite polymer layer can, in certain embodiments, have a thickness of at least 0.125 mm (e.g., 0.125, 0.25, 0.38, 0.5, 0.7, 0.76, 0.81, 1, 1.14, 1.19 or 1.2 mm). The composite polymer layer can have a thickness of less than or equal to 1.6 mm (e.g., from 0.4 to 1.2 mm, such as about 0.4, 0.5, 0.6, 0.7, 0.8, 0.9, 1.0, 1.1 or 1.2 mm). The composite polymer layer can cover most or substantially all of the two opposed major faces of the glass and can also include a peripheral portion having the same or different polymeric material with a higher modulus of elasticity. The glass sheets in contact with the composite polymer layer can be heated above the softening point thereof, such as, for example, at least 5°C or 10°C above the softening point, to promote bonding of the polymeric material(s) to the respective glass sheets. The heating can be performed with the glass in contact with the composite layers under pressure. One or more polymer interlayers may be incorporated into an exemplary glass laminate structure.

A plurality of interlayers may provide complimentary or distinct functionality, including adhesion promotion, acoustic control, UV transmission control, tinting, coloration and/or IR transmission control.

The polymer interlayer 130 can be in direct physical contact (e.g., laminated to) each of the respective external and internal glass sheets. The external glass sheet 110 has an exterior surface 112 and an interior surface 114. In a similar vein, the internal glass sheet 120 has an exterior surface 122 and an interior surface 124. As shown in the illustrated embodiment, the interior surface 114 of external glass sheet 110 and the interior surface 124 of internal glass sheet 120 are each in contact with polymer interlayer 130. Any one, both or none of the glass sheets 110, 120 can be chemically strengthened glass.

Glass laminates according to embodiments of the present disclosure can be adapted to provide an optically transparent barrier in architectural and automotive openings, e.g., automotive glazings. Glass laminates can be formed using a variety of processes. The assembly, in an exemplary embodiment, involves laying down a first sheet of glass, overlaying a polymer interlayer on a first portion of the first sheet, overlaying another polymer interlayer on a second portion of the first sheet, laying down a second sheet of glass, and then trimming the excess PVB to the edges of the glass sheets. A tacking step can include expelling most of the air from the interfaces and partially bonding the PVB to the glass sheets. The finishing step, typically carried out at elevated temperature and pressure, completes the mating of each of the glass sheets to the polymer interlayer(s). In the foregoing embodiments, the first sheet can be a chemically-strengthened glass sheet and the second sheet can be a non-chemically-strengthened glass sheet or vice versa.

During the lamination process, the interlayer can be typically heated to a temperature effective to soften the interlayer, which promotes a conformal mating of the interlayer to respective surfaces of the glass sheets. Typically for PVB, a lamination temperature can be about 140°C. Mobile polymer chains within the interlayer material develop bonds with the glass surfaces, which promote adhesion. Elevated temperatures also accelerate the diffusion of residual air and/or moisture from the glass-polymer interface. The application of pressure both promotes flow of the interlayer material, and suppresses bubble formation that otherwise could be induced by the combined vapor pressure of water and air trapped at the interfaces. To suppress bubble formation, heat and pressure are simultaneously applied to the assembly in an autoclave.

In some non-limiting embodiments, suitable internal glass sheets can be non-chemically-strengthened glass sheets such as soda-lime glass or can, in some embodiments, be chemically strengthened glass sheets. Optionally, the internal glass sheets can be heat strengthened. In embodiments where soda-lime glass is used as the non-chemically-strengthened glass sheet, conventional decorating materials and methods (e.g., glass frit enamels and screen printing) can also be used, which can simplify the glass laminate manufacturing process. Tinted soda-lime glass sheets can be incorporated into a glass laminate structure to achieve desired transmission and/or attenuation across the electromagnetic spectrum.

Glass laminate structures as described herein can thus provide beneficial effects, including the attenuation of acoustic noise, reduction of UV and/or IR light transmission, increased edge strength, and/or enhancement of the aesthetic appeal of a window opening. The individual glass sheets comprising the disclosed glass laminate structures, as well as the formed laminate structures, can be characterized by one or more attributes, including composition, density, thickness, surface metrology, as well as various properties including optical, sound-attenuation, and mechanical properties such as impact resistance. Various aspects of the disclosed glass laminate structures, hybrid or otherwise, are described herein.

Exemplary glass laminate structures can be adapted for use, for example, as windows or glazings, and configured to any suitable size and dimension. In embodiments, the glass laminate structures have a length and width that independently vary from 10 cm to 1 m or more (e.g., 0.1, 0.2, 0.5, 1, 2, or 5 m). Independently, the glass laminate structures can have an area of greater than 0.1 $m^2$, e.g., greater than 0.1, 0.2, 0.5, 1, 2, 5, 10, or 25 $m^2$.

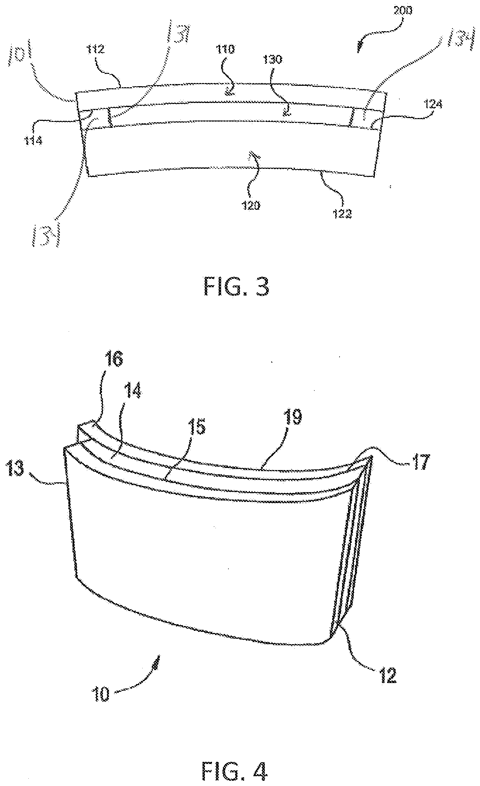

The glass laminate structures can be substantially flat or shaped for certain applications. For instance, the glass laminate structures can be formed as bent or shaped parts for use as windshields or cover plates as illustrated in Figure 3. An exemplary shaped glass laminate structure 200 is illustrated in Figure 3. The shaped laminate structure 200 comprises an external (chemically-strengthened) glass sheet 110 formed at a convex surface of the laminate while an internal (non-chemically-strengthened) glass sheet 120 is formed on a concave surface of the laminate. It will be appreciated, however, that the convex surface of a non-illustrated embodiment can comprise a non-chemically-strengthened glass sheet while an opposing concave surface can comprise a chemically-strengthened glass sheet. Of course, the convex and concave surfaces can both comprise chemically-strengthened glass sheets or non-chemically-strengthened glass sheets. A polymer interlayer 130 can be provided intermediate the external and internal glass sheets 110, 120. As noted above, the polymer interlayer 130 can comprise a first region having a first modulus of elasticity and a second region having a second modulus of elasticity. In some embodiments, the first region can be a central region 132 of the polymer interlayer 130 and the second region can be located along the perimeter of the central region 132, i.e., a peripheral region 134 of the polymer interlayer 130. The central region 132 can be any geometric shape (e.g., oval, circular, oblong, trapezoidal, symmetrical, asymmetrical, etc.) and can conform to a defined space or opening for the respective glass laminate structure. In similar fashion, the peripheral region 134 can annularly encompass the central region 132 and form an annular oval form, annular circular form, etc. Furthermore, the lateral dimensions of the peripheral region 134, i.e., the X, Y or lateral distance from an edge 101 of the glass laminate structure 100 to an edge 131 of the central region 132 can vary along the length of the respective peripheral region 134 or can be substantially constant. Moduli of elasticity of central and peripheral regions within an exemplary polymer interlayer can range from about 1 MPa to 75 MPa (e.g., about 1, 2, 5, 10, 15, 20, 25, 30, 40, 50, 60, 75, 80, 90 MPa). In some embodiments, the modulus of elasticity of the first or central region 132 can be about 15 MPa, between about 1 MPa to about 20 MPa, or between 2 to about 15 MPa. In these embodiments, the modulus of elasticity of the second or peripheral region 134 can be greater than the modulus of elasticity of the first or central region 132, can be greater than about 25 MPa, can be between 25 MPa and 90 MPa, can be greater than about 30 MPa, can be greater than about 50 MPa, can be about 75 MPa. In additional embodiments, moduli of the second or peripheral region 134 can be greater than 90 MPa, e.g., greater than 100 MPa, greater than 500 MPa, greater than 1 GPa, greater than 2 GPa, between 1GPa and 4GPa, greater than 4GPa, between 100 MPa and 1 GPa, etc. In some embodiments, exemplary thermosetting polymeric materials can be utilized for the peripheral region 134 which include, but are not limited to, polyurethanes, vulcanized rubber, Bakelite, polyester materials, ionomers (SentryGlass) phenol-formaldehyde materials, urea-formaldehyde materials, epoxy resins, polyimides, melamine resins, esters, polycyanurates, Duroplast and other suitable esters, resins, epoxies, cross-linked polymers and/or reinforced polymeric materials. Further, exemplary materials for the peripheral region 132 can also be, but not limited to, coatings applied by polymer coating systems as a liquid pre-polymeric material which can then be chemically reacted to form a polymeric coating. These polymer coating compositions can contain minimal, if any, (e.g., < 10%) solvent or water. In some embodiments, the pre-polymeric material can cure to a thermoset polymer especially in cases where minimal creep or resistance to flow of the cured coating material is necessary. Non-limiting examples of usable polymer coating chemistry families in this category are, but not limited to, 2-part epoxies, 2-part urethanes, 2-part acrylics, 2-part silicones, moisture cure urethanes or epoxies, phenolics, novolacs, urea formaldehyde, melamine formaldehyde, crosslinking acrylics or vinyls, alkyds, unsaturated polyesters, polyimides, polyamides, and photo or electron beam curable polymers. Exemplary photo or electron beam curable prepolymers can be from any of the three major families of this type of chemistry, e.g., free radical addition type (e.g., acrylates), free radical step growth type (e.g., thiol-ene), cationic addition type (e.g., epoxy homopolymerization), and combinations thereof.

The structure of an exemplary shaped glass laminate structure may be simple or complex. In certain embodiments, a shaped glass laminate structure may have a complex curvature where the glass sheets have a distinct radius of curvature in two independent directions. Such shaped glass sheets may thus be characterized as having "cross curvature," where the glass is curved along an axis that is parallel to a given dimension and also curved along an axis that is perpendicular to the same dimension. An automobile sunroof, for example, typically measures about 0.5 m by 1.0 m and has a radius of curvature of 2 to 2.5 m along the minor axis, and a radius of curvature of 4 to 5 m along the major axis.

Shaped glass laminate structures according to certain embodiments can be defined by a bend factor, where the bend factor for a given part is equal to the radius of curvature along a given axis divided by the length of that axis. Thus, for the exemplary automotive sunroof having radii of curvature of 2 m and 4 m along respective axes of 0.5 m and 1.0 m, the bend factor along each axis is 4. Shaped glass laminates can have a bend factor ranging from 2 to 8 (e.g., 2, 3, 4, 5, 6, 7, or 8).

Figure 4 is a perspective view of additional embodiments of the present disclosure. With reference to Figure 4 and as discussed in previous paragraphs, an exemplary laminate structure 10 can include an inner layer 16 of chemically strengthened glass, e.g., Gorilla® Glass. This inner layer 16 can be heat treated, ion exchanged and/or annealed. The outer layer 12 can be a non-chemically strengthened glass sheet such as conventional soda lime glass, annealed glass, or the like. The laminate 10 can also include a polymeric interlayer 14 intermediate the outer and inner glass layers. Of course, in additional embodiments, the inner layer 16 can be comprised of non-chemically strengthened glass and the outer layer 12 can be comprised of chemically strengthened glass. In a further embodiment, both the outer and inner layers 12, 16 can be comprised of chemically-strengthened glass or both the outer and inner layers 12, 16 can be comprised of non-chemically-strengthened glass. The inner layer of glass 16 can have a thickness of less than or equal to 1.0 mm and can have a residual surface CS level of between about 250 MPa to about 350 MPa with a DOL of greater than 60 microns. In another embodiment the CS level of the inner layer 16 can be about 300 MPa. In one embodiment, an interlayer 14 can have a thickness of approximately 0.8 mm. Exemplary interlayers 14 can be composite polymeric interlayers as described above and can include, but are not limited to, poly-vinylbutyral or other suitable polymeric materials as described herein. In additional embodiments, any of the surfaces of the outer and/or inner layers 12, 16 can be acid etched to improve durability to external impact events. For example, in one embodiment, a first surface 13 of the outer layer 12 can be acid etched and/or another surface 17 of the inner layer can be acid etched. In another embodiment, a first surface 15 of the outer layer can be acid etched and/or another surface 19 of the inner layer can be acid etched. Such embodiments can thus provide a laminate construction substantially lighter than conventional laminate structures with high optical clarity and which conforms to regulatory impact requirements. According to the present invention, thicknesses of the outer and/or inner layers 12, 16 have a range in thicknesses from 0.5 mm to 1.5 mm.

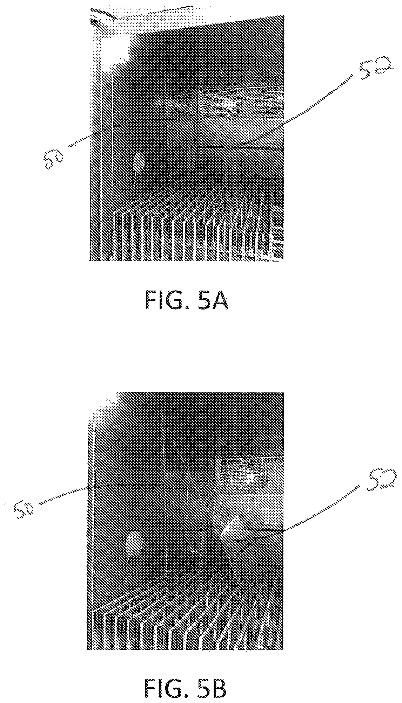

In one experiment, two glass laminate structures were constructed. A first laminate structure 50 having a thermosetting material around the periphery of a polymer interlayer (see, e.g., Figures 1-4) and a second laminate structure 52 having a standard polymer interlayer. The thermosetting material was provided in a strip of about 15-17 mm around the periphery of a central polymer interlayer. Each structure was placed in an environmental chamber, heated to 100° C, and soaked for about two hours. The second structure 52 exhibited a severe shape deformation after the thermal treatment while the first structure 50 having the thermosetting material did not exhibit any deformation. Figures 5A and 5B provide a before and after illustrations of this experiment.

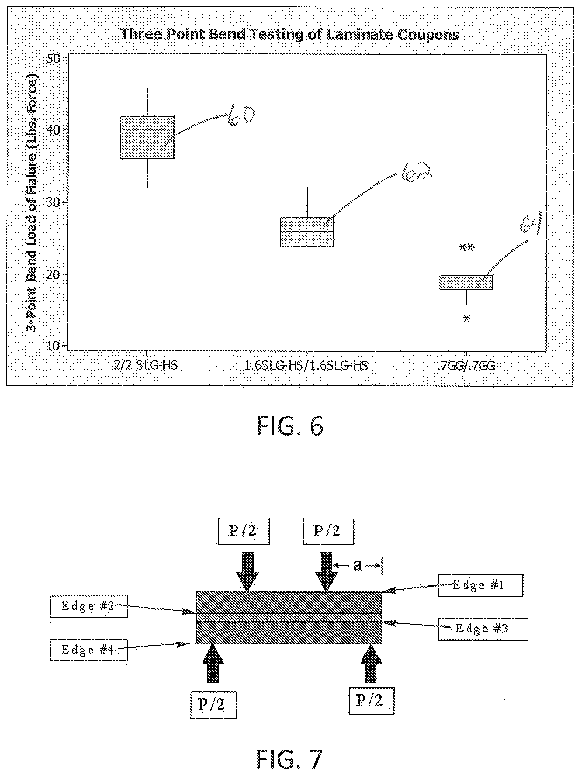

Figure 6 is a box plot of failure (lbs. - force) for three point bend experimentation of several embodiments of the present disclosure. With reference to Figure 6, a first group of constructions 60 included glass laminate structures having two panes of 2.0 mm heat-strengthened soda-lime glass, a second group of constructions 62 having glass laminate structures with two panes of 1.6 mm heat-strengthened soda-lime glass, and a third group of constructions 64 having glass laminate structures with two panes of 0.7 mm chemically strengthened glass (e.g., Gorilla® Glass). None of the illustrated embodiments included an exemplary polymer interlayer described above having a central portion 132 surrounded by a peripheral portion 134 with a higher modulus. Rather, each construction included a conventional PVB interlayer. Since the load failure is directly proportional to thickness square, an inherent penalty can be observed for utilization of lower thickness materials.

Figure 7 is a schematic illustration of a four point bend test of a laminate structure. With reference to Figure 7, the use of thinner glass in glass laminate structures holds serious implications for product reliability as the load required to create a fracture (P) can be directly proportional to the glass thickness squared ($t^2$). This is demonstrated by the equation for determining 4-point bend failure stress ($\sigma_F$) for glass bars:

$$\sigma_F = \frac{3P(L\text{-}S)}{2t^2b} \qquad (1)$$

where b represents bar width, L represents length of support span, and S represents length of loading span. It follows that as glass thickness (t) is reduced, the load to create a fracture (P) is reduced quadratically. When a laminate structure is flexed, the stresses experienced on the two pieces of glass are complex and are a function of the properties of the interlayer and the glass thicknesses.

Assuming that the load is directly transferred through the interlayer to the second glass pane or sheet, the maximum bending moment (M) can be effectively divided in half as it is shared by two plies. Therefore the maximum failure stress occurring in edges 2 and 4 of Figure 7 can be found by modifying equation (1) as illustrated in the following relationship:

$$\sigma_2 = \sigma_4 = \frac{(M/2)(t/2)}{(bt^3/12)} \quad = \quad \frac{3P(L\text{-}S)}{4t^2b} \qquad (2)$$

where the thickness value (t) represents the thickness of the individual glass pane.

Benefits and advantages of embodiments of the present disclosure can be observed by several examples and experiments. For example, in a laminate structure 10 mm wide with two panes of 1 mm thick glass and an interlayer of 0.5 mm thick, if it were assumed that stresses are directly translated through the interlayer (i.e., if the laminate performs as if there was no interlayer and as if it had two panes of glass stacked on each other) then equation (2) applies. If a load of 20 units force were applied to this structure, the experienced stress on the edges of both plies becomes:

$$\sigma_2 = \sigma_4 = \frac{(20)*K}{(10*1^2)} \quad = 2*K \text{ load units/mm}^2 \qquad (3)$$

where K represents a geometric constant to account for the loading and support spans. The stress experienced can be shared equally on both plies and therefore doubles the opportunity for breakage in such a structure.

By way of further example, in a laminate structure having similar dimensions, if the interlayer were treated as if it was rigidly attached to the glass panes and possessed the same modulus as the glass panes the relevant equation to apply would be equation (1) whereby t becomes the sum of the glass panes and interlayer thickness = 1+1+0.5 = 2.5 mm. The experienced stress on the edge for the same loading becomes:

$$\sigma_4 = \frac{(20)*K}{(10*2.5^2)} = 0.64*K \text{ load units/mm}^2 \qquad (4)$$

It should be noted that the experienced stresses are now approximately 3 times lower than for the previous example meaning that the laminate structure can withstand substantially more load before fracture. The maximum tensile stress is now only experienced on edge 4 as stresses experienced on edge 2 are compressive as they are above the mid-plane of the bending moment.

Actual experienced stresses, however, are more complicated and lie somewhere in between these two examples. Generally, the stresses are a function of temperature which changes the modulus of the polymer interlayer (e.g., colder temperatures can result in a rigid PVB interlayer whereby the respective laminate structure behaves more like a monolithic case (i.e., the second example); hotter temperatures can result in a pliable PVB interlayer whereby the respective laminate structure behaves more like the first example). Embodiments of the present disclosure, however, provide a composite polymer interlayer having a peripheral border with a high modulus of elasticity in comparison to the central region of the polymer interlayer that can utilize a traditional interlayer material (e.g., PVB, etc.). Embodiments of the present disclosure can thus enjoy the benefit that the central region maintains traditional functions of a polymer interlayer (e.g., retention of glass and occupants during crash and fracture events) while exhibiting superior edge strength performance (e.g., during flexure the laminate structure behaves substantially monolithically). In alternative embodiments of the present disclosure, glass can be employed to bridge the gap between the two panes of glass in the laminate structure around the periphery thereof. This glass can be attached through thermal bonding or by means of the above described adhesives whereby the glass perimeter would be thick enough to significantly increase the rigidity of the laminate around the edges and a lighter weight interlayer such as PVB could be made thicker without adding weight, (i.e., PVB having approximately 1/2 the density of glass). Exemplary glass materials utilized in such embodiments can be, but are not limited to, low melting temperature glasses.

Exemplary low melting temperature glasses include, but are not limited to, borate and phosphate glasses such as tin phosphates, tin fluorophosphates and tin fluoroborates. These glasses can also include one or more dopants, including but not limited to tungsten, cerium and niobium. Such dopants, if included, can affect, for example, the optical properties of the glass layer. Exemplary tin fluorophosphate glass compositions can be expressed in terms of the respective compositions of SnO, $SnF_2$ and $P_2O_5$ in a corresponding ternary phase diagram. Suitable low melting temperature glasses can include $SnO_2$, ZnO, $TiO_2$, ITO, and other low melting glass compositions. Suitable tin fluorophosphates glasses include 20-100 mol% SnO, 0-50 mol% $SnF_2$ and 0-30 mol% $P_2O_5$. These tin fluorophosphates glass compositions can optionally include 0-10 mol% $WO_3$, 0-10 mol% $CeO_2$ and/or 0-5 mol% $Nb_2O_5$. Additional compositions for low melting temperature glasses include compositions described in commonly-assigned U.S. Patent No. 5,089,446 and U.S. Patent Application Serial Nos. 11/207,691, 11/544,262, 11/820,855, 12/072,784, 12/362,063, 12/763,541, 12/879,578, and 13/841,391. Of course, in other embodiments high temperature melting glasses can be utilized in place of these low temperature melting glasses.

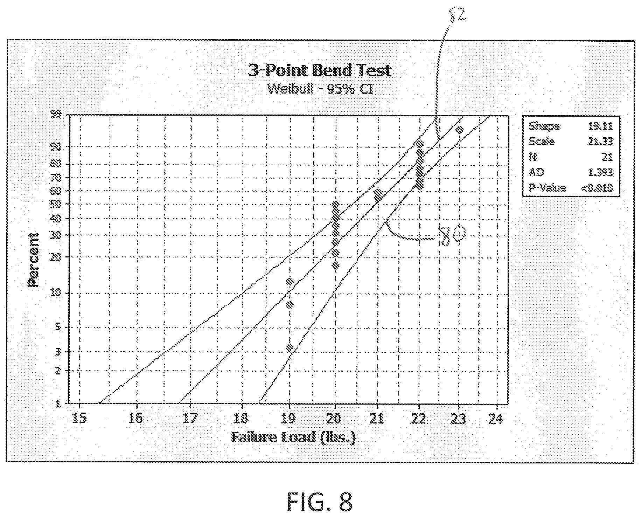

Additional experiments were performed on embodiments of the present disclosure. In one experiment, a first glass laminate structure 80 comprised two panes of approximately 0.7 mm chemically strengthened glass (e.g., Gorilla® Glass) with an intermediate polymer interlayer having a 5 mm peripheral region of Loctite epoxy (Loctite 3491), and a second glass laminate structure 82 comprised two panes of approximately 0.7 mm chemically strengthened glass (e.g., Gorilla® Glass) with an intermediate polymer interlayer having a 5 mm peripheral region of an exemplary fiber coating. Figure 8 is a Weibull plot of three-point bend testing of these embodiments at various loadings. As illustrated, a shift in the increased loading for the first glass laminate structure can be observed.

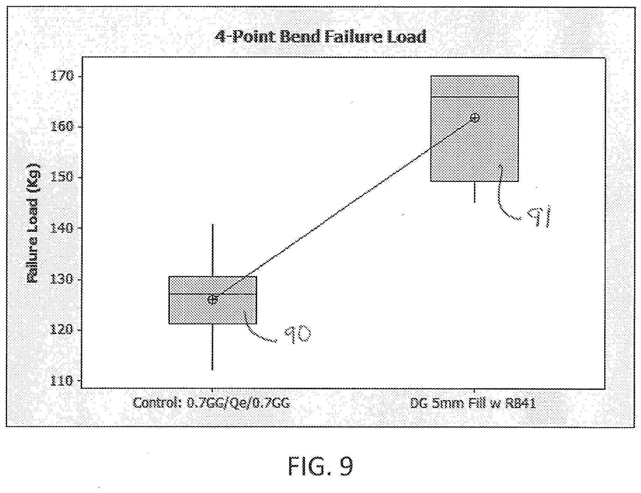

Figure 9 is a box plot of failure load (kgs) for four point bend experimentation of several embodiments of the present disclosure. With reference to Figure 9, a control laminate construction 90 included two panes of approximately 0.7 mm chemically strengthened glass (e.g., Gorilla® Glass) with an intermediate polymer interlayer and no peripheral region, and another laminate construction 91 included two panes of approximately 0.7 mm chemically strengthened glass (e.g., Gorilla® Glass) with a suitable intermediate polymer interlayer having a 5 mm peripheral region of Eastman Chemical DG grade PVB material (DG material). As illustrated, this exemplary embodiment exhibited a significant increase in the failure load as compared to the control, e.g., approximately a thirty percent increase in edge failure load.

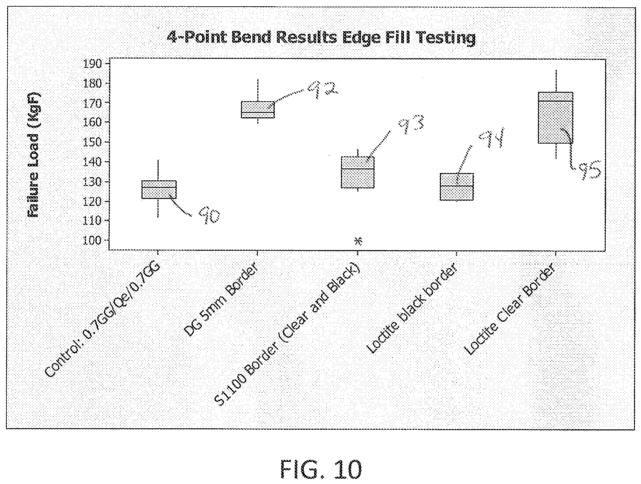

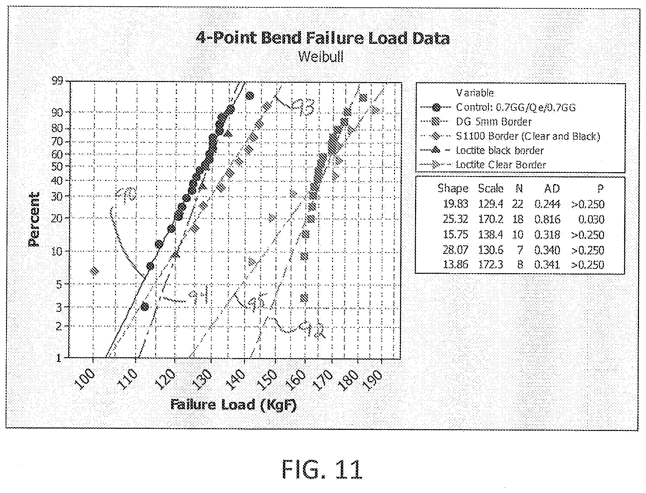

Figure 10 is a box plot of failure load (kgs) for four point bend experimentation of several embodiments of the present disclosure. Figure 11 is a four-point bend failure load plot for the embodiments depicted in Figure 10. With reference to Figures 10 and 11, a control laminate construction 90 included two panes of approximately 0.7 mm chemically strengthened glass (e.g., Gorilla® Glass) with an intermediate polymer interlayer and no peripheral region, and another laminate construction 92 included two panes of approximately 0.7 mm chemically strengthened glass (e.g., Gorilla® Glass) with a suitable intermediate polymer interlayer having a 5 mm peripheral region of DG material, a second laminate construction 93 included two panes of approximately 0.7 mm chemically strengthened glass (e.g., Gorilla® Glass) with a suitable intermediate polymer interlayer having a 5 mm peripheral region of an exemplary fiber coating, a third laminate construction 94 included two panes of approximately 0.7 mm chemically strengthened glass (e.g., Gorilla® Glass) with a suitable intermediate polymer interlayer having a 5 mm peripheral region of Loctite black border material, and a fourth laminate construction 95 included two panes of approximately 0.7 mm chemically strengthened glass (e.g., Gorilla® Glass) with a suitable intermediate polymer interlayer having a 5 mm peripheral region of Loctite clear border material. As illustrated, each embodiment exhibited increases in the failure load as compared to the control; however, the embodiments having the peripheral region containing DG material and Loctite clear material provide an approximately thirty percent and greater increase in edge failure load. To increase the performance of embodiments utilizing the exemplary fiber coating, an exemplary adhesion promoter can be employed resulting in comparable increases in edge failure load. As can be readily seen through experimentation and theory, embodiments of the present disclosure can provide superior, light-weight glass laminate structures having high edge strengths.

Due to the increase in modulus of the edge region of embodiments of the present disclosure, the respective laminate structure can effectively experience lower tensile stresses in the edge region when flexed and can therefore be able to withstand higher edge loads without breaking. Additionally, the polymer can act as a protective barrier against bumping and fracture of the edge if it is wrapped around the exposed edge of the glass. Such features and advantages described herein can allow use of thinner materials than previously employed in the industry and can improve the rigidity of glass laminate structures and allow such structures to meet rigidity requirements of such applications including, but not limited to, sliding windows, sunroofs, table tops, etc. Exemplary embodiments also do not deform at higher temperatures hence expanding their working conditions to meet different applications. Through utilization of chemically strengthened glass, embodiments can also achieve the durability, low weight, scratch resistance, etc. provided by Gorilla® Glass or Willow® Glass.

In some embodiments, a laminate structure is provided having a first glass layer, a second glass layer, and at least one polymer interlayer intermediate the first and second glass layers. The polymer interlayer can include a first region having a first modulus of elasticity and a second region having a second modulus of elasticity. The second modulus of elasticity can be greater than the first modulus of elasticity. In some embodiments, the first region can be a central region of the polymer interlayer and the second region can be a peripheral region of the polymer interlayer encompassing the first region. Exemplary moduli of elasticity of the first region can be about 15 MPa, between about 1 MPa to about 20 MPa, or between 2 to about 15 MPa. Exemplary moduli of elasticity of the second region can be greater than about 25 MPa, between 25 MPa and 90 MPa, greater than about 30 MPa, greater than about 50 MPa, or about 75 MPa. In additional embodiments, moduli of the second or peripheral region can be greater than 90 MPa, e.g., greater than 100 MPa, greater than 500 MPa, greater than 1 GPa, greater than 2 GPa, between 1GPa and 4GPa, greater than 4GPa, between 100 MPa and 1 GPa, etc. In some embodiments, the width of the second region can be variable or can be substantially constant. In other embodiments, the first glass layer can be chemically strengthened glass and the second glass layer can be non-chemically strengthened glass, whereby the first layer is external or internal to the second layer. Of course, both layers can be chemically strengthened glass or both layers can be non-chemically strengthened glass. The thicknesses of the first and second glass layers can be, but are not limited to, a thickness not exceeding 1.0 mm, a thickness not exceeding 0.7 mm, a thickness within a range from about 0.5 mm to about 1.0 mm, a thickness from about 0.5 mm to about 0.7 mm. Of course, the thicknesses of the first and second glass layers can be different. In some embodiments, the composition of the first and second glass layers can be different. Exemplary materials for the first region of the polymer interlayer can include, but are not limited to, poly vinyl butyral (PVB), polycarbonate, acoustic PVB, ethylene vinyl acetate (EVA), thermoplastic polyurethane (TPU), ionomer, a thermoplastic material, and combinations thereof. Exemplary materials for the second region of the polymer interlayer can include, but are not limited to, polyurethanes, vulcanized rubber, polyester materials, ionomers, phenol-formaldehydes, urea-formaldehydes, epoxy resins, polyimides, melamine resins, esters, polycyanurates, esters, resins, epoxies, cross-linked polymers, reinforced polymeric materials, 2-part epoxies, 2-part urethanes, 2-part acrylics, 2-part silicones, moisture cure urethanes and epoxies, phenolics, novolacs, melamine formaldehydes, alkyds, unsaturated polyesters, polyimides, polyamides, photo or electron beam curable polymers, and combinations thereof. An exemplary polymer interlayer can have a thickness of between about 0.4 to about 1.2 mm. Some interlayers can have thickness of approximately 0.8 mm. An exemplary laminate structure can have an area greater than 1 m$^2$ and can be an automotive windshield, sunroof, cover plate or the like. In some embodiments, one or more surfaces of the first and second glass layers can be acid etched.

According to the present invention, a laminate structure is provided having a first glass layer, a second glass layer, and an interlayer intermediate the first and second glass layers whereby the interlayer includes a first region having a first modulus of elasticity and a second region having a second modulus of elasticity. This second modulus of elasticity is greater than the first modulus of elasticity. According to the present invention, the first region is a central region of the interlayer and the second region is a peripheral region of the interlayer encompassing the first region. Exemplary materials for the first region can include, but are not limited to, poly vinyl butyral (PVB), polycarbonate, acoustic PVB, ethylene vinyl acetate (EVA), thermoplastic polyurethane (TPU), ionomer, a thermoplastic material, polyurethanes, vulcanized rubber, polyester materials, ionomers, phenol-formaldehydes, urea-formaldehydes, epoxy resins, polyimides, melamine resins, esters, polycyanurates, esters, resins, epoxies, cross-linked polymers, reinforced polymeric materials, 2-part epoxies, 2-part urethanes, 2-part acrylics, 2-part silicones, moisture cure urethanes and epoxies, phenolics, novolacs, melamine formaldehydes, alkyds, unsaturated polyesters, polyimides, polyamides, photo or electron beam curable polymers, and combinations thereof. In some embodiments, the second region can include materials such as, but not limited to, polyurethanes, vulcanized rubber, polyester materials, ionomers, phenol-formaldehydes, urea-formaldehydes, epoxy resins, polyimides, melamine resins, esters, polycyanurates, esters, resins, epoxies, cross-linked polymers, reinforced polymeric materials, 2-part epoxies, 2-part urethanes, 2-part acrylics, 2-part silicones, moisture cure urethanes and epoxies, phenolics, novolacs, melamine formaldehydes, alkyds, unsaturated polyesters, polyimides, polyamides, photo or electron beam curable polymers, and combinations thereof. In alternative embodiments, the second region of the interlayer can be a glass material.

While this description can include many specifics, these should not be construed as limitations on the scope thereof, but rather as descriptions of features that can be specific to particular embodiments.

Similarly, while operations are depicted in the drawings or figures in a particular order, this should not be understood as requiring that such operations be performed in the particular order shown or in sequential order, or that all illustrated operations be performed, to achieve desirable results. In certain circumstances, multitasking and parallel processing can be advantageous.

As shown by the various configurations and embodiments illustrated in Figures 1-11, various embodiments for glass laminate structures having improved edge strength have been described.

## Claims

1. A laminate structure (100) comprising:

   a first glass layer (110);
   a second glass layer (120); and
   a polymer interlayer (130) intermediate the first and second glass layers (110, 120),
   wherein the polymer interlayer (130) includes a first region having a first modulus of elasticity and a second region having a second modulus of elasticity greater than the first modulus of elasticity,
   wherein the first region is a central region (132) of the polymer interlayer (130) and the second region is a peripheral region (134) of the polymer interlayer (130) encompassing the central region (132), and
   wherein at least one of the first glass layer (110) and the second glass layer (120) comprises a thickness in a range from 0.5 mm to 1.5 mm.

2. The laminate structure of Claim 1, wherein the width of the second region is variable or substantially constant.

3. The laminate structure of any of the preceding claims, wherein the first glass layer (110) is chemically strengthened glass and the second glass layer (120) is chemically strengthened glass.

4. The laminate structure of any of claims 1-2, wherein the first glass layer (110) is non-chemically strengthened glass and the second glass layer (120) is chemically strengthened glass.

5. The laminate structure of any of the preceding claims, wherein the thicknesses of the first and second glass layers (110, 120) are selected from the group consisting of a thickness not exceeding 1.5 mm, a thickness not exceeding 1.0 mm, and a thickness not exceeding 0.7 mm.

6. The laminate structure of any of the preceding claims, wherein the first region of the polymer interlayer comprises a material selected from the group consisting of poly vinyl butyral (PVB), polycarbonate, acoustic PVB, ethylene vinyl acetate (EVA), thermoplastic polyurethane (TPU), ionomer, a thermoplastic material, and combinations thereof.

7. The laminate structure of any of the preceding claims, wherein the second region of the polymer interlayer comprises a material selected from the group consisting of polyurethanes, vulcanized rubber, polyester materials, ionomers, phenol-formaldehydes, urea-formaldehydes, epoxy resins, polyimides, melamine resins, esters, polycyanurates, esters, resins, epoxies, cross-linked polymers, reinforced polymeric materials, 2-part epoxies, 2-part urethanes, 2-part acrylics, 2-part silicones, moisture cure urethanes and epoxies, phenolics, novolacs, melamine formaldehydes, alkyds, unsaturated polyesters, polyimides, polyamides, photo or electron beam curable polymers, and combinations thereof.

8. The laminate structure of any of the preceding claims, wherein the polymer interlayer (130) has a thickness between 0.4 to 1.2 mm.

9. The laminate structure of claim 8, wherein the thickness of the polymer interlayer (130) is approximately 0.8 mm.

10. The laminate structure of any of the preceding claims, wherein the laminate structure (100) has an area greater than 1 m$^2$.

11. The laminate structure of any of the preceding claims, wherein the laminate structure (100) is an automotive windshield, a sunroof, or a cover plate.


**Patentansprüche**

1. Laminatstruktur (100), aufweisend:

   eine erste Glasschicht (110);
   eine zweite Glasschicht (120); und
   eine Polymerzwischenschicht (130) zwischen der ersten und zweiten Glasschicht (110, 120),
   wobei die Polymerzwischenschicht (130) einen ersten Bereich mit einem ersten Elastizitätsmodul und einen zweiten Bereich mit einem zweiten Elastizitätsmodul umfasst, der größer als der erste Elastizitätsmodul ist,
   wobei der erste Bereich ein mittiger Bereich (132) der Polymerzwischenschicht (130) und der zweite Bereich ein Randbereich (134) der Polymerzwischenschicht (130) ist, der den mittigen Bereich (132) umgibt, und
   wobei die erste Glasschicht (110) und/oder die zweite Glasschicht (120) eine Dicke in einem Bereich von 0,5 mm bis 1,5 mm hat bzw. haben.

2. Laminatstruktur nach Anspruch 1, wobei die Breite des zweiten Bereichs variabel oder im Wesentlichen konstant ist.

3. Laminatstruktur nach einem der vorhergehenden Ansprüche, wobei es sich bei der ersten Glasschicht (110) um ein chemisch verstärktes Glas und bei der zweiten Glasschicht (120) um ein chemisch verstärktes Glas handelt.

4. Laminatstruktur nach einem der Ansprüche 1 bis 2, wobei es sich bei der ersten Glasschicht (110) um ein nicht chemisch verstärktes Glas und bei der zweiten Glasschicht (120) um ein chemisch verstärktes Glas handelt.

5. Laminatstruktur nach einem der vorhergehenden Ansprüche, wobei die Dicken der ersten und zweiten Glasschicht (110, 120) aus der Gruppe gewählt sind, die aus einer Dicke unter 1,5 mm, einer Dicke unter 1,0 mm und einer Dicke unter 0,7 mm besteht.

6. Laminatstruktur nach einem der vorhergehenden Ansprüche, wobei der erste Bereich der Polymerzwischenschicht ein Material aufweist, das aus der Gruppe ausgewählt ist, die aus Polyvinylbutyral (PVB), Polycarbonat, akustischem PVB, Ethylenvinylacetat (EVA), thermoplastischem Polyurethan (TPU), einem Ionomer, einem thermoplastischen Material und Kombinationen daraus besteht.

7. Laminatstruktur nach einem der vorhergehenden Ansprüche, wobei der zweite Bereich der Polymerzwischenschicht ein Material aufweist, das aus der Gruppe ausgewählt ist, die aus Polyurethanen, vulkanisiertem Gummi, Polyestermaterialien, Ionomeren, Phenol-Formaldehyden, Harnstoff-Formaldehyden, Epoxidharzen, Polyimiden, Melaminharzen, Estern, Polycyanuraten, Estern, Harzen, Epoxiden, vernetzten Polymeren, verstärkten Polymermaterialien, Zweikomponenten-Epoxiden, Zweikomponenten-Urethanen, Zweikomponenten-Acrylaten, Zweikomponenten-Silikonen, bei Feuchtigkeit aushärtbaren Urethanen und Epoxiden, Phenolen, Novolak-Harzen, Melamin-Formaldehyden, Alkyden, ungesättigten Polyestern, Polyimiden, Polyamiden, durch Belichtung oder Elektronenstrahl aushärtbaren Polymeren und Kombinationen daraus besteht.

8. Laminatstruktur nach einem der vorhergehenden Ansprüche, wobei die Polymerzwischenschicht (130) eine Dicke zwischen 0,4 und 1,2 mm hat.

9. Laminatstruktur nach Anspruch 8, wobei die Dicke der Polymerzwischenschicht (130) ungefähr 0,8 mm beträgt.

10. Laminatstruktur nach einem der vorhergehenden Ansprüche, wobei die Laminatstruktur (100) eine Fläche von über 1 m$^2$ hat.

**11.** Laminatstruktur nach einem der vorhergehenden Ansprüche, wobei es sich bei der Laminatstruktur (100) um eine Windschutzscheibe eines Kraftfahrzeugs, ein Schiebedach oder eine Abdeckplatte handelt.


**Revendications**

**1.** Structure stratifiée (100) comprenant :

une première couche de verre (110) ;
une deuxième couche de verre (120) ; et
une couche intermédiaire en polymère (130) intercalée entre la première et la deuxième couche de verre (110, 120),
sachant que la couche intermédiaire en polymère (130) inclut une première zone ayant un premier module d'élasticité et une deuxième zone ayant un deuxième module d'élasticité supérieur au premier module d'élasticité,
sachant que la première zone est une zone centrale (132) de la couche intermédiaire en polymère (130) et la deuxième zone est une zone périphérique (134) de la couche intermédiaire en polymère (130) entourant la zone centrale (132), et
sachant qu'au moins l'une de la première couche de verre (110) et de la deuxième couche de verre (120) présente une épaisseur comprise dans une plage de 0,5 mm à 1,5 mm.

**2.** La structure stratifiée de la revendication 1, sachant que la largeur de la deuxième zone est variable ou sensiblement constante.

**3.** La structure stratifiée de l'une quelconque des revendications précédentes, sachant que la première couche de verre (110) est du verre renforcé chimiquement et la deuxième couche de verre (120) est du verre renforcé chimiquement.

**4.** La structure stratifiée de l'une quelconque des revendications 1 à 2, sachant que la première couche de verre (110) est du verre non renforcé chimiquement et la deuxième couche de verre (120) est du verre renforcé chimiquement.

**5.** La structure stratifiée de l'une quelconque des revendications précédentes, sachant que les épaisseurs de la première et de la deuxième couche de verre (110, 120) sont sélectionnées dans le groupe constitué par une épaisseur ne dépassant pas 1,5 mm, une épaisseur ne dépassant pas 1,0 mm, et une épaisseur ne dépassant pas 0,7 mm.

**6.** La structure stratifiée de l'une quelconque des revendications précédentes, sachant que la première zone de la couche intermédiaire en polymère comprend un matériau sélectionné dans le groupe constitué par le butyral polyvinylique (PVB), le polycarbonate, le PVB acoustique, l'acétate de vinyle d'éthylène (EVA), le polyuréthane thermoplastique (TPU), un ionomère, un matériau thermoplastique, et les combinaisons de ceux-ci.

**7.** La structure stratifiée de l'une quelconque des revendications précédentes, sachant que la deuxième zone de la couche intermédiaire en polymère comprend un matériau sélectionné dans le groupe constitué par les polyuréthanes, le caoutchouc vulcanisé, les matériaux de polyester, les ionomères, les phénols-formaldéhydes, les urées-formaldéhydes, les résines époxy, les polyimides, les résines mélamine, les esters, les polycyanurates, les esters, les résines, les époxys, les polymères réticulés, les matériaux polymériques renforcés, les époxys à deux composants, les uréthanes à deux composants, les acryliques à deux composants, les silicones à deux composants, les uréthanes et époxys durcissables à l'humidité, les phénoliques, les novolaques, les mélamines-formaldéhydes, les alkydes, les polyesters insaturés, les polyimides, les polyamides, les polymères durcissables par photo ou faisceau d'électrons, et les combinaisons de ceux-ci.

**8.** La structure stratifiée de l'une quelconque des revendications précédentes, sachant que la couche intermédiaire en polymère (130) a une épaisseur comprise entre 0,4 et 1,2 mm.

**9.** La structure stratifiée de la revendication 8, sachant que l'épaisseur de la couche intermédiaire en polymère (130) est d'environ 0,8 mm.

**10.** La structure stratifiée de l'une quelconque des revendications précédentes, sachant que la structure stratifiée (100) a une aire supérieure à 1 m$^2$.

**11.** La structure stratifiée de l'une quelconque des revendications précédentes, sachant que la structure stratifiée (100) est un pare-brise d'automobile, un toit ouvrant, ou une plaque de recouvrement.

FIG. 1

FIG. 2

FIG. 3

FIG. 4

FIG. 5A

FIG. 5B

FIG. 6

FIG. 7

FIG. 8

FIG. 9

FIG. 10

EP 3 055 129 B1

FIG. 11

24

**EP 3 055 129 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61887646
- US 5270518 A
- US 2009181203 A
- US 5523138 A
- US 5089446 A
- US 207691
- US 11544262 B
- US 11820855 B
- US 12072784 B
- US 12362063 B
- US 12763541 B
- US 12879578 B
- US 13841391 B